Europäisches Patentamt

European Patent Office

Office européen des brevets

(19)

(11) **EP 1 381 102 A2**

(12) **EUROPEAN PATENT APPLICATION**

(43) Date of publication:
**14.01.2004 Bulletin 2004/03**

(51) Int Cl.⁷: $H01M\ 8/10$

(21) Application number: **03015107.0**

(22) Date of filing: **03.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **09.07.2002 JP 2002199693**

(71) Applicant: **Matsushita Electric Industrial Co., Ltd.**
**Osaka 571-0051 (JP)**

(72) Inventors:
• **Tanaka, Aoi**
**Osaka-shi, Osaka 543-0051 (JP)**
• **Okada, Yukihiro**
**Katano-shi, Osaka 576-0021 (JP)**

• **Shibutani, Satoshi**
**Hirakata-shi, Osaka 573-0052 (JP)**
• **Hojo, Nobuhiko**
**Neyagawa-shi, Osaka 572-0004 (JP)**
• **Noguchi, Yasutaka**
**Naga-gun, Wakayama 649-6223 (JP)**
• **Yuasa, Kohji**
**Hirakata-shi, Osaka 573-1176 (JP)**

(74) Representative: **Patentanwälte**
**Leinweber & Zimmermann**
**Rosental 7,**
**II Aufgang**
**80331 München (DE)**

(54) **Electrolyte membrane-electrode assembly for a fuel cell; fuel cell using the same and method of making the same**

(57) An MEA is made by: preparing a mixture of a polymer electrolyte and a catalyst; forming, on a transfer sheet, a thin film of the catalyst mixture; transferring the thin film onto one surface of a proton conductive electrolyte membrane (36) for forming a catalyst thin film layer thereon; and repeating the transferring step for forming plural catalyst thin film layers (31-35), wherein the transferring steps causes the plural catalyst thin film layers to have a density gradient of sequentially decreasing from its proton conductive electrolyte membrane side to the other side, and wherein the catalyst layer has therein a substantially constant weight ratio of the polymer electrolyte to the catalyst.

Thereby, the utilization rate of the catalyst increases, and the fuel diffusion in the catalyst layer is improved, whereby the resultant cell voltage of the fuel cell increases. Further, using a single catalyst paste, a desired density gradient or distribution in the catalyst layer can be realized.

FIG. 3

EP 1 381 102 A2

**Description**

BACKGROUND OF THE INVENTION

The present invention relates to a fuel cell, more particularly to a polymer electrolyte fuel cell, and a method of making the same, wherein the fuel cell directly uses a fuel, such as hydrogen, methanol, ethanol or dimethyl ether, and an oxidant such as air or oxygen.

In a polymer electrolyte fuel cell, a fuel such as hydrogen, which is capable of generating hydrogen ions, is electrochemically reacted with an oxidant such as air, which contains oxygen. For structuring a fuel cell, first of all, catalyst layers are formed on both surfaces of a proton conductive electrolyte membrane (polymer electrolyte membrane) that selectively transports hydrogen ions. On the outer surface of each of the catalyst layers, a gas diffusion layer is formed, using e.g. an electrically conductive carbon paper having been subjected to water repellency treatment and having both fuel gas permeability and electronic conductivity. The combination of each catalyst layer and each gas diffusion layer is called electrode.

Next, gaskets or gas sealing members are respectively placed at peripheries of the electrodes in a manner that the gaskets sandwich the proton conductive electrolyte membrane in order to prevent the supplied fuel and oxidant from leaking to outside and from mixing with each other. The gaskets are integrated with the proton conductive electrolyte membrane and the pair of electrodes. The combination of such membrane and electrodes, or such combination further including the gaskets, is called electrolyte membrane-electrode assembly (MEA hereafter).

A catalyst layer for a fuel cell is generally formed by preparing a mixture having, as main ingredients, a catalyst made of a platinum group noble metal, electrically conductive carbon particles as catalyst carrier, and a polymer electrolyte, and by making a thin film from such mixture. In the present specification, the combination of the catalyst and the catalyst carrier carrying the catalyst may be simply referred to as catalyst in some instances.

As a polymer electrolyte, perfluorocarbon sulfonic acid such as Nafion (trade name: product of DuPont Company) is currently generally used.

The function of the catalyst layer in a fuel cell is described as follows. On the surface of the catalyst layer, diffusion of reactants and reaction products, electron conduction and hydrogen ion conduction occur. Catalytic reaction progresses in such a manner, e.g., that the reactants reach the catalyst, the electrons pass through the electrically conductive carbon particles contacting the catalyst, and the hydrogen ions pass through the proton conductive polymer electrolyte. The catalytic reaction progresses only at the three-phase interface among the catalyst, the electron conduction path in e.g. the electrically conductive carbon particles, and the hydrogen ion conduction path in e.g. the polymer electrolyte. The area of the three-phase interface is an effective reaction area (surface area) of the catalyst. As such area increases, the activity of the catalyst increases.

A method of increasing the reaction area is to control the mixing ratio among the catalyst, electrically conductive carbon particles and the polymer electrolyte in making the catalyst layer in order to avoid excess and shortage of such constituting ingredients, thereby optimizing the constitution.

The combination of the catalyst and the polymer electrolyte is provided on and integrated with both surfaces of the proton conductive polymer electrolyte membrane, e.g., by being: coated on the gas diffusion layer; thermally transferred to the proton conductive electrolyte membrane; or subjected to screen-printing or doctor blade coating.

In order to realize a higher output of a fuel cell, it is important to improve the diffusion property of the reactants and the reaction products in the catalyst layer, thereby increasing the efficiency of the catalytic reaction.

According to Japanese Laid-open Patent Publication Hei 8-88008, the catalyst particle size and the concentration of the polymer electrolyte in a catalyst layer are controlled so as to make the pores among the catalyst carriers at the gas diffusion layer side in the catalyst layer greater than those therein at the proton conductive electrolyte membrane side at the other side. Thereby, the catalyst layer has higher diffusion property at its gas diffusion layer side than at its proton conductive electrolyte membrane side.

Such a catalyst layer can be made by preparing a mixture dispersion of a catalyst, a polymer electrolyte and an organic solvent, making a thin film of the mixture, and keeping the thin film still, or by subjecting the mixture dispersion to centrifugal action.

On the other hand, according to Japanese Laid-open Patent Publication Hei 8-162123, the catalyst particle size and the concentration of the polymer electrolyte in the catalyst layer are controlled in a manner that catalyst particles having a smaller particle size are positioned at the proton conductive electrolyte membrane side, whereas catalyst particles having a larger particle size are positioned at the gas diffusion layer side. Thereby, the gas supply and the gas exhaustion in the resultant fuel cell become easy, whereby the fuel cell can have a high output.

However, in such catalyst layers, the technologies for increasing the diffusion property of the fuel and the exhaustion property of the reaction products cause the amount of the polymer electrolyte in the catalyst layer to be smaller at the gas diffusion layer side and larger at the proton conductive electrolyte membrane side. Consequently, in the catalyst layer at the gas diffusion layer side, the amount of the polymer electrolyte relative to the amount of the catalyst becomes too small, whereby sufficient hydrogen ion conduction path cannot be obtained, thereby decreasing effective catalytic reaction area, hence decreasing the output voltage of the resultant fuel cell.

Further, in the catalyst layer at the proton conductive electrolyte membrane side, the amount of the polymer electrolyte relative to the amount of the catalyst becomes too large, whereby sufficient electron conduction path cannot be obtained, thereby decreasing effective catalytic reaction area, hence decreasing the output voltage of the resultant fuel cell.

BRIEF SUMMARY OF THE INVENTION

The object of the present invention is to solve the above-described problems, and to provide an MEA for a fuel cell, a fuel cell using the same and a method of making the same, wherein the utilization rate of the catalyst and the fuel diffusion property in the catalyst layer are improved, thereby realizing high reaction efficiency at the catalyst layer.

The object of the present invention is achieved by providing an MEA for a fuel cell, the MEA comprising: a proton conductive electrolyte membrane; a pair of catalyst layers for contact with both surfaces of the proton conductive electrolyte membrane, respectively; and a pair of gas diffusion layers for contact with the catalyst layers, respectively, each of the catalyst layers comprising a polymer electrolyte and a catalyst carried by an electrically conductive catalyst carrier, wherein the catalyst layer has such a density as to decrease from side thereof at the proton conductive electrolyte membrane to side thereof at the gas diffusion layer, and has such a weight ratio of the polymer electrolyte to the catalyst as to be substantially constant from side thereof at the proton conductive electrolyte membrane to side thereof at the gas diffusion layer.

The object of the present invention is also achieved by a method of making an MEA for a fuel cell, the method comprising the steps of: preparing a mixture comprising at least a polymer electrolyte and a catalyst carried by a catalyst carrier; forming, on a transfer sheet, a thin film of the mixture; transferring the thin film onto at least one major surface of a proton conductive electrolyte membrane, thereby forming a catalyst thin film layer on the major surface of the proton conductive electrolyte membrane; repeating the transferring step at least once for forming at least one further catalyst thin film layer on the catalyst thin film layer, thereby forming a catalyst layer comprising a plurality of catalyst thin film layers; and providing a gas diffusion layer on the catalyst layer, wherein the transferring step causes the plurality of catalyst thin film layers in the catalyst layer to have such densities as to sequentially decrease from the one thereof at side of the proton conductive electrolyte membrane to the one thereof at side of the gas diffusion layer.

In the method of making the MEA, the transferring step is preferred to comprise a thermal transfer process.

In the method of making the MEA, the transferring step is also preferred to comprise a pressing process for pressing respective ones of the plurality of the catalyst thin film layers toward the proton conductive electrolyte membrane.

It is also preferred to provide a fuel cell, using the above-described MEA, or using the above-described method of making the MEA.

Once an MEA is provided, it can be incorporated into a fuel cell, using a well-known method of making a fuel cell. Accordingly, a detailed description therefor is considered unnecessary, but a brief description is added as follows.

A cell stack is first formed by stacking main cell stack elements comprising MEAs, electrically conductive separator plates and cooling water units (also made by using electrically conductive separator plates). Each of the electrically conductive separator plates is provided with gas flow channels on both surfaces thereof for respectively supplying and exhausting a fuel gas and an oxidant gas to and from both surfaces of the proton conductive electrolyte membrane of each MEA. Each water cooling unit is provided with cooling water flow channel for allowing cooling water to flow therethrough, thereby cooling heat generated in the cell stack.

The cell stack is provided with manifolds (through-holes) for allowing the gases and the cooling water to flow therethrough, respectively. The cell stack is also provided with other fuel cell elements comprising current collecting plates, electrically insulating plates and end plates for forming a core fuel cell assembly as well as tightening rods, penetrating the core fuel cell assembly, and other tightening elements such as nuts and washers. Using such tightening rods and other tightening elements, tightening pressure is applied to the end plates for tightening the core fuel cell assembly including the cell stack, thereby forming a fuel cell.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

FIG. 1 is a schematic oblique view of an assembly of a proton conductive electrolyte membrane and a catalyst layer for a fuel cell according to an example of the present invention.

FIG. 2 is a schematic cross-sectional view of an MEA according to the example of the present invention.

FIG. 3 is a schematic oblique view of an assembly of a proton conductive electrolyte membrane and a catalyst layer as prepared in the example of the present invention, wherein the catalyst layer has plural stacked catalyst thin film layers.

FIG. 4A is a schematic cross-sectional view of a main part of a fuel cell having incorporated therein MEAs according to the example of the present invention.

FIG. 4B is a schematic enlarged cross-sectional view of a part of FIG. 4A encircled by dashed line circle B as shown therein.

FIG. 5 is a graph showing cell characteristics of fuel cells (cell stacks) according to the example of the present invention and a comparative example.

FIG. 6 is a graph showing anode over-potential characteristics of the fuel cells (cell stacks) according to the example of the present invention and the comparative example.

DETAILED DESCRIPTION OF THE INVENTION

An MEA for a fuel cell according to the present invention comprises: a proton conductive electrolyte membrane; a pair of catalyst layers for contact with both surfaces of the proton conductive electrolyte membrane, respectively; and a pair of gas diffusion layers for contact with the catalyst layers, respectively, each of the catalyst layers comprising a polymer electrolyte and a catalyst carried by an electrically conductive catalyst carrier, wherein the catalyst layer has such a density as to decrease from side thereof at the proton conductive electrolyte membrane to side thereof at the gas diffusion layer, and has such a weight ratio of the polymer electrolyte to the catalyst as to be substantially constant from side thereof at the proton conductive electrolyte membrane to side thereof at the gas diffusion layer.

It is to be noted here that the term "density" used in the present specification means "mass density" in principle, except for the term, e.g., of current density, and that the term "substantially constant" used in the present specification can cover the meaning of "exactly constant". It is to be noted as well that just as the proton conductive electrolyte membrane sandwiched by the catalyst layers has protonic conductivity, the polymer electrolyte in the catalyst layer also has protonic conductivity.

Owing to the features according to the present invention as described above, the number of catalyst particles, which can be effectively used for catalytic reaction, increases, thereby increasing the output voltage of the resultant fuel cell. The mechanism of producing such effect will be described hereinafter.

A first feature according to the present invention solves such a technical problem of prior art that the resultant cell voltage decreases due to too high or too low weight ratio of the polymer electrolyte to the catalyst in the catalyst layer as compared with the optimum value or optimum region of such weight ratio, particularly near the gas diffusion layer or near the proton conductive electrolyte membrane in the catalyst layer. The feature that the weight ratio of the polymer electrolyte to the catalyst is substantially constant in the entire catalyst layer makes it possible to select an optimum value or optimum region of such weight ratio in the entire catalyst layer for maximizing the resultant cell voltage, thereby realizing an optimum balance in weight between the polymer electrolyte and the catalyst in the entire catalyst layer.

A second feature according to the present invention is explained as follows. In a fuel cell, as described above, a proton conductive electrolyte membrane for selectively transporting only hydrogen ions is provided, at both surfaces thereof, integrally with catalyst layers, respectively, where reaction of a fuel and an oxidant (air) is generated, thereby producing an assembly of the membrane and the catalyst layers. Such assembly is further sandwiched at both surfaces thereof with electrically conductive gas diffusion layers, thereby producing an MEA. The fuel and the oxidant (air) are supplied to the catalyst layers, in which hydrogen ions are transported and electrons are conducted or transferred, and from which reaction products are exhausted. It greatly influences resultant cell performance whether sufficient transporting paths (supply path, exhaustion path, transporting path and conduction path) of such elements are secured.

For improving the resultant output voltage of the fuel cell, it is important to adjust the entire structure of the catalyst layer. The catalyst layer is desired to have such density of the polymer electrolyte and the catalyst therein as to vary from a gas diffusion layer side thereof to a proton conductive electrolyte membrane side thereof. More specifically, such density is desired to be high at the proton conductive electrolyte membrane side of the catalyst layer, and to decrease toward the gas diffusion layer side thereof. In other words, the porosity of the catalyst layer is desired to be low at the proton conductive electrolyte membrane side of the catalyst layer, and to increase toward the gas diffusion layer side thereof. Owing to such density gradient in the catalyst layer, the fuel and the oxidant, in the form of both gas (hydrogen and oxygen) and liquid such as methanol aqueous solution, can be more readily transported from the gas diffusion layer to the catalyst layer.

Furthermore, water and carbon dioxide generated in each catalyst layer can be more readily and selectively exhausted to the gas diffusion layer, not to the proton conductive electrolyte membrane. As a result, the diffusion velocities of such water and gases are improved, whereby the fuel and the oxidant can be more readily exchanged with the reaction products, thereby improving the resultant cell voltage.

It is also important to design the structure in the catalyst layer. This is explained as follows. It is important to form, on the catalyst, a three-phase interface composed of the fuel, the polymer electrolyte (hydrogen ion transporter or transporting path) and the electrically conductive catalyst carrier such as carbon (electron conductor). Only the portion of the three-phase interface formed on the catalyst can serve as an effective portion for catalytic reaction. The area of such three-phase interface is mainly determined by the composition ratio among the catalyst, the polymer electrolyte and the carbon in the catalyst layer.

When the amount of the polymer electrolyte relative to the amount of the catalyst in the catalyst layer is too small, the area of the three-phase interface formed then becomes too small, so that the effective area of the catalyst becomes too small, thereby causing the output voltage of the fuel cell to be too low. On the other hand, when the amount of the polymer electrolyte relative to the amount of the catalyst in the catalyst layer is too large, the pores in the catalyst layer, through which the fuel is supplied or transported, are likely to be occluded by the polymer electrolyte. Accordingly, the area of the three-phase interface and also the transportation velocities of the fuel or gases on the catalyst are decreased, thereby decreasing the output voltage of the resultant fuel cell.

In other words, the ratio of the amount of the polymer electrolyte to the amount of the catalyst layer has an optimum value or optimum region. According to the present invention or the example of the present invention as will be described later, such ratio is made constant or substantially constant throughout the entire region of the catalyst layer. Accordingly, it is possible to optimize such ratio throughout the entire region of the catalyst layer.

It is also important that the catalyst layer have a smaller density at the gas diffusion layer side therein than at the proton conductive electrolyte membrane side therein. Thereby, it becomes possible to exchange the fuel for the reaction products in the catalyst layer, and to increase the effective reaction area, thereby improving the resultant cell voltage.

By applying the MEA according to the present invention or the example of the present invention to a well-known method of making a fuel cell, a fuel cell according to the present invention or the example of the present invention can be made, as will be described later in the Example.

The present invention further provides a novel method of making an MEA, and a novel method of making a fuel cell using such method of making the MEA.

The method of making an MEA for a fuel cell according to the present invention comprises the steps of: preparing a mixture comprising at least a polymer electrolyte and a catalyst carried by a catalyst carrier; forming, on a transfer sheet, a thin film of the mixture; transferring the thin film onto at least one major surface of the proton conductive electrolyte membrane, thereby forming a catalyst thin film layer on the major surface of the proton conductive electrolyte membrane; repeating the transferring step at least once for forming at least one further catalyst thin film layer on the catalyst thin film layer, thereby forming a catalyst layer comprising a plurality of catalyst thin film layers; and providing a gas diffusion layer on the catalyst layer, wherein the transferring step causes the plurality of catalyst thin film layers in the catalyst layer to have such densities as to sequentially decrease from the one thereof at side of the proton conductive electrolyte membrane to the one thereof at side of the gas diffusion layer.

According to such method of making an MEA, the ratio of the amount of the polymer electrolyte to the amount of the catalyst in the plural catalyst thin film layers for forming the catalyst layer can be made constant or substantially constant. This condition of constant ratio of the amount of the polymer electrolyte to the amount of the catalyst can be maintained even when the densities of the catalyst layers are varied. When the plural catalyst thin film layers are sequentially formed on the proton conductive electrolyte membrane, the thicknesses of the plural catalyst thin film layers are varied during the sequential formation of the catalyst thin film layers. This variation of the thickness of the catalyst thin film layer may cause the density of the sum of the polymer electrolyte and the catalyst in each one of the catalyst thin film layers to vary from the other catalyst thin film layers. However, even with such variation of the density of the catalyst layer, the condition of constant ratio of the amount of the polymer electrolyte to the amount of the catalyst can be maintained. Accordingly, such ratio can be optimized for the entire region of the catalyst layer by selecting an optimum value or optimum value region of such ratio for each catalyst thin film layer.

Further, because of the condition according to the method of the present invention that the plurality of catalyst thin film layers in the catalyst layer are made to have such densities as to sequentially decrease from the one thereof at side of the proton conductive electrolyte membrane to the one thereof at side of the gas diffusion layer, the catalyst thin film layers are made to have such porosities as to sequentially increase in the same sequence (namely, from the one thereof at side of the proton conductive electrolyte membrane to the one thereof at side of the gas diffusion layer). Thereby, the permeability of the gases and water in the direction perpendicular to the surface of the MEA can be increased.

Furthermore, the method of the present invention, which forms the catalyst layer by repeating the process of transferring the catalyst thin film layer, has an advantage that it is easy to conduct the method, because thereby the catalyst layer can be easily formed by merely stacking catalyst thin film layers having the same or substantially same material composition. Such method has a further advantage that it is unnecessary to prepare (or change) plural mixing ratios of the polymer electrolyte and the catalyst in the method of making an MEA, whereby the method can advantageously be simplified and reduced in time and cost.

In the above method of making the MEA, the transferring step (of transferring the catalyst thin film layers) is preferred to comprise a thermal transfer process, because thereby the transfer step can be easily conducted.

Further, the transferring step is also preferred to comprise a pressing process for pressing respective ones of the plural catalyst thin film layers toward the proton conductive electrolyte membrane. For example, by employing hot press process for the pressing and forming the first catalyst thin film layer onto the proton conductive electrolyte membrane, and again employing the hot press process for pressing the forming the second catalyst thin film layer onto the first catalyst thin film layer (and repeating the same process for any further catalyst thin film layers), the required sequential decrease of the densities of the catalyst thin film layers (from the proton conductive electrolyte membrane side toward the gas diffusion layer side) can be easily realized.

By applying the method of making an MEA according to the present invention or the example of the present invention to a well-known method of making a fuel cell, the method of making a fuel cell according to the present invention or the example of the present invention can be made as will be described in the following Example.

Hereinafter, Example of the present invention and Comparative Example will be described. It is to be noted that the Example is non-limiting, and various alterations and modifications can be made therefrom.

EXAMPLE

A method of making an MEA (electrolyte membrane-electrode assembly) having a proton conductive electrolyte membrane sandwiched by a pair of electrodes, each being composed of a catalyst layer and a gas diffusion layer, will be described below.

An electrically conductive carbon powder (product of AKZO Chemie Company: Ketjen Black EC) having an average primary particle size of 30 nm was used as a catalyst carrier for carrying a catalyst for an air electrode. Such catalyst carrier was allowed to carry 50 wt% of platinum particles having an average particle size of 30Å.

On the other hand, the same electrically conductive carbon powder, Ketjen Black EC, was used as a catalyst carrier for carrying a catalyst for a fuel electrode as well. The catalyst carrier was allowed to carry 50 wt%, in total, of platinum particles (25 wt%) and ruthenium particles (25 wt%) respectively having an average particle size of 30Å.

Each of the thus prepared two combinations of catalyst carriers carrying the catalysts was dispersed in isopropanol to make two catalyst dispersions. Meanwhile, a polymer electrolyte was dispersed in ethyl alcohol to make a polymer electrolyte dispersion. Each of the two catalyst dispersions was mixed with the polymer electrolyte dispersion, thereby making two catalyst pastes. The thus conducted step is referred to as first step according to the present EXAMPLE.

In the first step, the weight ratio of the catalyst to the polymer electrolyte was adjusted to be 1:1. Further, as the polymer electrolyte, perfluorocarbon sulfonic acid ionomer (product of Asahi Glass Co., Ltd.: Fleminon) was used.

Using doctor blade, each of the two catalyst pastes was printed on a polytetrafluoroethylene (trade name: Teflon) sheet, thereby forming a catalyst paste layer having a thickness of 50 µm. The catalyst paste layers were dried at room temperature in ambient air for 5 hours, thereby obtaining two thin films for catalyst layers. The thus conducted step is referred to as second step according to the present EXAMPLE.

Meanwhile, a proton conductive electrolyte membrane (product of DuPont Company: Nafion 117) having a thickness of 175 µm was prepared. The above-obtained two thin films for catalyst layers were thermally transferred to this proton conductive electrolyte membrane. More specifically, the proton conductive electrolyte membrane was sandwiched by the two polytetrafluoroethylene sheets in a manner that the thin films for catalyst layers contacted the respective major surfaces of the membrane, thereby making a sandwich assembly. The thus made sandwich assembly was hot-pressed by applying a pressure of 5 MPa to the two polytetrafluoroethylene sheets for compressing the sandwich assembly at a temperature of 100 °C for 30 minutes, thereby bonding the neighboring elements in the sandwich assembly, respectively.

By taking off the polytetrafluoroethylene sheets from the thus bonded sandwich assembly, an assembly of the proton conductive electrolyte membrane having, on the two major surfaces thereof, the two thin films for catalyst layers (each being first catalyst thin film layer for air electrode and fuel electrode) was made.

Next, a second catalyst thin film layer was formed on each of the first catalyst thin film layers as follows. Two further polytetrafluoroethylene sheets were prepared. On such sheets, two thin films, each having a thickness of 50 µm, for catalyst layers were formed by the same process as used for the first catalyst thin film layers, including the printing and the drying steps.

The above-prepared sandwich assembly of the proton conductive electrolyte membrane having the first catalyst thin film layers was sandwiched by the two further polytetrafluoroethylene sheets in a manner that the thin films for catalyst layers on the further polytetrafluoroethylene sheets contacted the respective surfaces of the first catalyst thin film layers, thereby making a sandwich assembly. The thus made sandwich assembly was hot-pressed by applying a pressure of 5 MPa to the two further polytetrafluoroethylene sheets for compressing the sandwich assembly at a temperature of 100 °C for 30 minutes, thereby bonding the neighboring elements in the sandwich assembly, respectively, which can be referred to as thermal transfer process. The thus conducted step is referred to as third step according to the present EXAMPLE.

By taking off the further polytetrafluoroethylene sheets from the thus bonded sandwich assembly after the thermal transfer process, an assembly of the proton conductive electrolyte membrane having, on the two major surfaces thereof, the two catalyst thin film layers, and the two second catalyst thin film stacked on the first catalyst thin film layers was made.

In a manner similar to that described above, a third catalyst thin film layer was stacked on each of the second catalyst thin film layers. By repeating similar steps, a sandwich assembly of a proton conductive electrolyte membrane having a stack of a first to fifth catalyst thin film layers bonded on each of the major surfaces thereof (namely, catalyst layer composed of first to fifth catalyst thin film layers for the air electrode, and catalyst layer composed of first to fifth catalyst thin film layers for the fuel electrode) was obtained. The thus conducted step is referred to as fourth step according to the present EXAMPLE.

The sandwich assembly of catalyst layer-proton conductive electrolyte membrane-catalyst layer thus obtained by the fourth step was further sandwiched by a pair of gas diffusion layers, as described below, thereby producing an MEA 1 according to the present EXAMPLE.

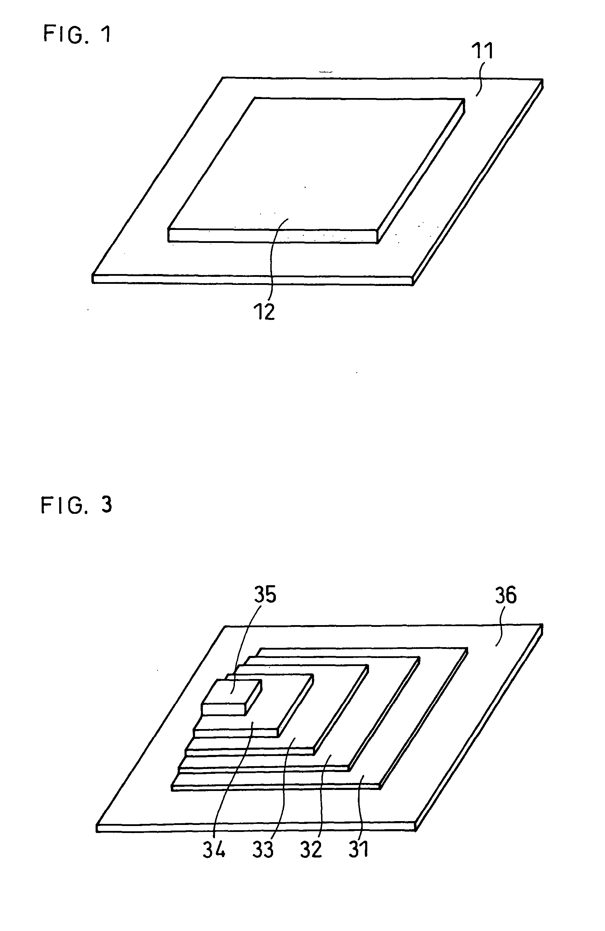

The catalyst layer formed on the proton conductive electrolyte membrane is schematically shown in FIG. 1. FIG is a schematic oblique view showing the structure of an assembly of membrane-catalyst layer formed by proton conductive electrolyte membrane 11 having catalyst layer 11 formed thereon. In FIG. 1, only one of the two catalyst layers is shown. FIG. 1 schematically shows the structure that the catalyst layer 12 cut to have a size of 5 cm × 5 cm (5 cm square) is formed on the proton conductive electrolyte membrane 11 by the process as described above.

A carbon paper (product of Toray Industries, Inc.: TGP-H-060) having a thickness of 180 μm was bonded, by hot pressing, to each of the catalyst layers (on each of the major surfaces of the proton conductive electrolyte membrane) of the assembly of the proton conductive electrolyte membrane and the catalyst layers, thereby obtaining MEA 1. The temperature, pressure and time for the hot pressing were 130 °C, 4 MPa and 30 minutes, respectively.

It is to be noted that the polytetrafluoroethylene sheet, as used above, was selected from the viewpoint of its characteristics of easiness of taking off from respective thin films in the transfer processes. Other materials can also be used if such materials have similar characteristics.

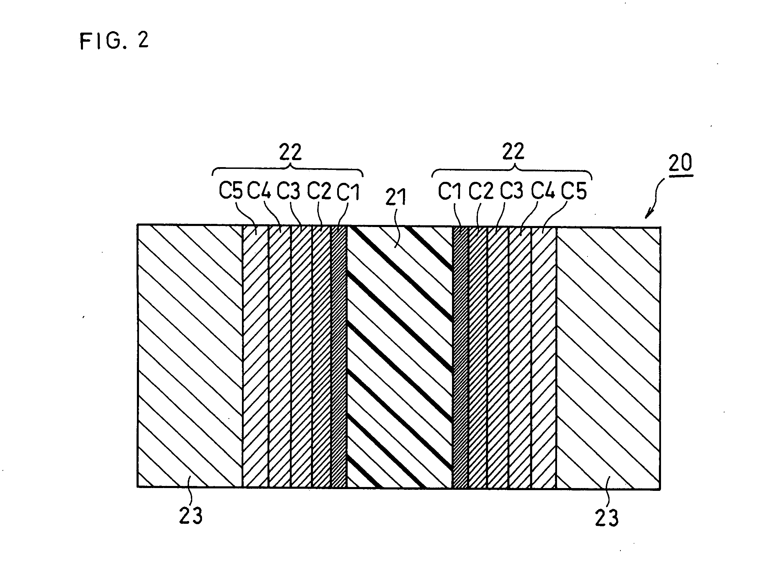

FIG. 2 is a schematic cross-sectional view of MEA 1. Referring to FIG. 2, MEA 1 (reference numeral 20) comprises proton conductive electrolyte membrane 21, catalyst layers 22 and gas diffusion layers 23 made of carbon paper. As will be also described later, first catalyst thin film layer C1 was subjected to compression steps five times during the five thermal transfer steps for forming the first catalyst thin film layer C1 to fifth catalyst thin film layer C5. Likewise, second catalyst thin film layer C2 to the fifth catalyst thin film layer C5 were subjected to compression steps four times to one time, respectively. Because of the difference in the number of compression steps to which the respective catalyst thin film layers were subjected, these five catalyst thin film layers consequently have such different thicknesses that the thickness decreases in the sequence from the fifth catalyst thin film layer C5 to the first catalyst thin film layer C1.

Furthermore, for the same reason, the five catalyst thin film layers have such different densities of the polymer electrolyte and the catalyst that the density increases in the sequence from the fifth catalyst thin film layer C5 to the first catalyst thin film layer C1. In other words, the porosity of the catalyst thin film layer increases in the sequence from the first catalyst thin film layer C1 to the fifth catalyst thin film layer C5. This means that each catalyst layer has a suitable structure, in resultant fuel cells, for allowing water and gases to pass between the proton conductive electrolyte membrane and the gas diffusion layer in the direction of stacking the plural catalyst thin film layers.

COMPARATIVE EXAMPLE

For comparison, MEA 2 was made by the following processes, using prior art technologies. Basically, only the process of making catalyst layers is described below, because the other processes are similar to those as used for making MEA 1.

Each of the two combinations of catalyst carriers (product of AKZO Chemie Company: Ketjen Black EC) carrying the catalysts for air electrode and fuel electrode, as prepared in EXAMPLE, was dispersed in isopropanol to make two catalyst dispersions. Meanwhile, a polymer electrolyte was dispersed in ethyl alcohol to make a polymer electrolyte dispersion. Each of the two catalyst dispersions was mixed with the polymer electrolyte dispersion, thereby making two catalyst pastes. The thus conducted step is referred to as first step according to the present COMPARATIVE EXAMPLE.

Next, using doctor blade, each of the two catalyst pastes was printed on a polytetrafluoroethylene sheet, thereby forming a catalyst paste layer having a thickness of 200 μm. The thus conducted step is referred to as second step according to the present EXAMPLE.

The thus prepare catalyst paste layers on the polytetrafluoroethylene sheets were dried at room temperature in ambient air for 5 hours, and each cut to square shape having a size of 5 cm × 5 cm, respectively. The thus prepared thin layers for catalyst were thermally transferred, by hot pressing, onto the two major surfaces of a proton conductive electrolyte membrane (product of DuPont Company: Nafion 117), thereby obtaining an assembly of the proton conductive electrolyte membrane and the catalyst layers. The temperature, pressure and time for the hot pressing were 130 °C, 5 MPa and 30 minutes, respectively.

After the thermal transfer step, the polytetrafluoro ethylene sheets were taken off from both surfaces of the membrane-catalyst layer assembly, and a gas diffusion layer made of carbon paper was bonded, by hot pressing, to each of the catalyst layers (namely, those for anode or fuel electrode, and cathode or air electrode). The temperature, pressure and time for the hot pressing were 130 °C, 4 MPa and 30 minutes, respectively. Thus, MEA 2 according to the COMPARATIVE EXAMPLE was made.

The thicknesses of each catalyst layer in MEA 1 according to the EXAMPLE and MEA 2 according to the COMPARATIVE EXAMPLE were measured in the following manner by visual observation, using a scanning electron microscope (SEM).

First, the carbon papers, as gas diffusion layers, were taken off from each of MEA 1 and MEA 2, each leaving the assembly of the catalyst layers and the proton conductive electrolyte membrane. A part of each of these assemblies was buried in an electrically conductive resin. The resin was cured, and each of the assemblies buried in the resin was cut. Each of the cut surfaces of the assemblies was ground and polished. Thereafter, each thickness was measured, using the SEM.

The results of the measurements are shown in Table 1.

Table 1

|  | Number of thermal transfer | Thickness of anode side catalyst layer (μm) | Thickness of cathode side catalyst layer (μm) | Thickness of proton conductive electrolyte membrane (μm) |
|---|---|---|---|---|
| MEA 1 | 5 | 122 | 122 | 133 |
| MEA 2 | 1 | 122 | 124 | 137 |

As evident from Table 1, there are no big differences observed regarding thickness between MEA 1 and MEA 2 with respect to any one of the anode side (fuel electrode side) catalyst layers, the cathode side (air electrode side) catalyst layers and the proton conductive electrolyte membranes. Accordingly, it is further evident therefrom that required elements in MEAs in the case of the method according to the EXAMPLE (namely the present invention) can have thicknesses similar to those in the case of the method according to the COMPARATIVE EXAMPLE (namely the prior art).

[Measurement of Density Distribution in Catalyst Layer]

An assembly of a proton conductive electrolyte membrane and a catalyst layer was prepared to be used for measuring the distribution of the catalyst on the basis of the volume filling factor of the catalyst layer and the thickness of each one of the sequentially transferred and stacked catalyst thin film layers. Although this assembly has no gas diffusion layers, this assembly is referred to as MEA 3 here for the purpose of easier understanding in comparing with MEA 2.

It is to be noted here that according to the present specification, the term "volume filling factor" is used to mean a proportion, in percentage, of volume of solid matters in the catalyst layer to the apparent volume of the catalyst layer, wherein the apparent volume is a product (mathematical) of the area of the catalyst layer and the thickness of the catalyst layer. The volume filling factor corresponds to the density of the catalyst layer.

For preparing catalyst thin film layers, a catalyst paste for anode (fuel electrode) as prepared in the first step in the EXAMPLE was printed on a polytetrafluoroethylene sheet as prepared in the second step in the EXAMPLE.

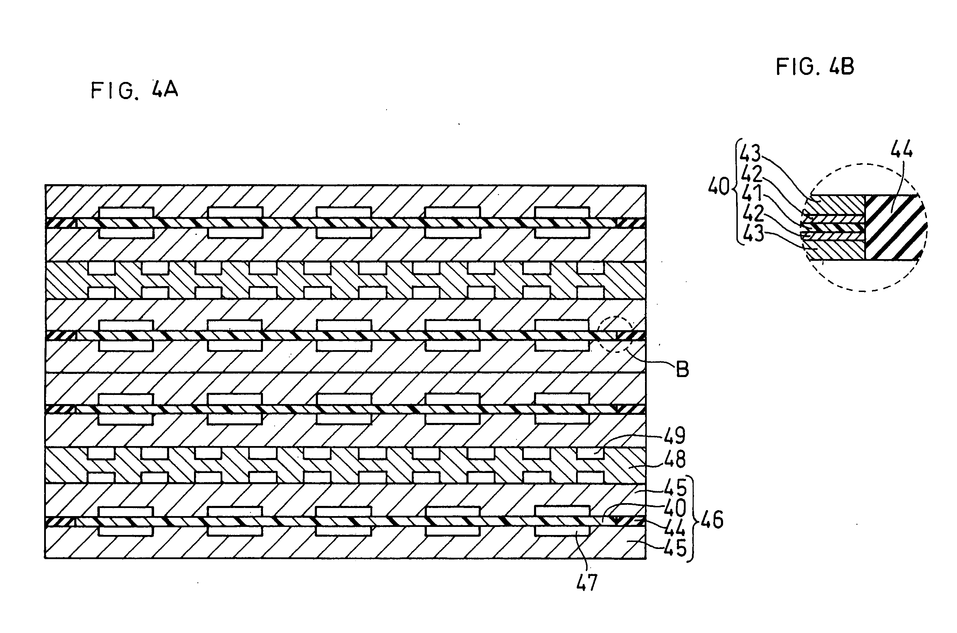

FIG. 3 is a schematic oblique view, showing plural catalyst thin film layers 31 to 35 were sequentially formed (stacked) on proton conductive electrolyte membrane 36 in making the MEA 3. Here, five square shaped catalyst thin film layers sequentially decreasing in the size by one centimeter were prepared. More specifically, the catalyst thin film layer 31 had a shape of 5 cm square, the layer 32 had a shape of 4 cm square, the layer 33 had a shape of 3 cm square, the layer 34 had a shape of 2 cm square, and the layer 35 had a shape of 1 cm square. As shown in FIG. 3, they are thermally transferred and stacked on the proton conductive electrolyte membrane 36 in the above-described sequence, wherein the transferring (stacking) step used here was similar to that used in the above-described transferring step in the EXAMPLE.

The MEA 3, as prepared for measuring and comparing thickness of the catalyst layer, was buried in an electrically conductive resin and subjected to the thickness measurement using the SEM visual observation in the same manner as described above. For comparison, MEA 2 was also subjected to the same measurement in the same manner.

Table 2 shows the results, according to the above measurements, of the thickness of each of the catalyst thin film layers in MEA 3 as well as the thickness of the catalyst layer in MEA 2. Table 2 also shows the density and the volume filling factor of each catalyst thin film layer and catalyst layer.

Table 2

| | Catalyst layer of MEA 3 | | | | | Cat. layer of MEA 2 |
|---|---|---|---|---|---|---|
| | Cat. thin film layer 31 | Cat. thin film layer 32 | Cat. thin film layer 33 | Cat. thin film layer 34 | Cat. thin film layer 35 | |
| Thickness ($\mu$m) | 20 | 22 | 24 | 26 | 30 | 122 |
| Density (g/cm$^3$) | 2.51 | 2.28 | 2.09 | 1.96 | 1.67 | 1.00 |
| Volume filling factor(%) | 87 | 79 | 73 | 67 | 58 | 35 |

As apparent from Table 2, the density corresponds to the volume filling factor. It is also evident from Table 2 that the catalyst layer of MEA 2 had a thickness of 122 μm (single layer) because it was subjected to the thermal transfer step only once, whereas the respective catalyst thin film layers of MEA 3 had different thicknesses from each other, because they were subjected to the thermal transfer steps different times. Table 2 also indicates the points as described in the following.

The catalyst thin film layer 31 that contacted the proton conductive electrolyte membrane 36 had a thickness of 20 μm, which was the smallest among the five catalyst thin film layers. In contrast, the catalyst thin film layer 35 that was to be positioned at the gas diffusion layer side had a thickness of 30 μm, which was the largest among them. This was because the catalyst thin film layers closer to the proton conductive electrolyte membrane were subjected to the pressing by hot pressing more times than those farther from the proton conductive electrolyte membrane, whereby those closer to the membrane were made thinner.

Since the weight of each of the catalyst thin film layers after the second step was the same, the volume filling factors, and hence the densities, of the catalyst thin film layers closer to the proton conductive electrolyte membrane were higher than those farther from the membrane. As a result, the stacked catalyst thin film layers had such sequentially decreasing densities as to sequentially decrease in the sequence or direction from the one thereof at side of the proton conductive electrolyte membrane to the one thereof at side farthest from the membrane, namely at side to face the gas diffusion layer. In other words, the density in the resultant catalyst layer was caused thereby to sequentially decrease in the same sequence or direction, so that the porosity in the resultant catalyst layer sequentially increased in the same sequence or direction.

According to the prior art, it is necessary to employ various techniques for making a catalyst layer having a gradient of volume filling factor (density) or different volume filling factors (densities) distributed therein. One of such techniques is to stack a plurality of catalyst layers having different catalyst filling factors from each other. Another technique is to use various catalysts having various particle sizes for realizing catalyst density gradient.

In contrast to such prior art, according to the method described above in the EXAMPLE, a single kind of catalyst paste was used for forming, on a sheet, thin films for a catalyst layer, and the required distribution gradient of the density or volume filling factor in the catalyst layer was realized by stacking a plurality of such thin films.

According to the prior art, it is necessary to prepare plural different mixtures of a catalyst and a polymer electrolyte having different concentrations of the two (namely, different ratios of the amount of the catalyst to the amount of polymer electrolyte) for the purpose of making a catalyst layer having a density gradient therein. On the other hand, according to the EXAMPLE, the requirement can be met by using only one mixture of a catalyst and a polymer electrolyte, whereby the method of making an MEA can be very much simplified.

The ratio of the amount of a catalyst to the amount of a polymer electrolyte in a catalyst layer of an MEA is an important factor for maximizing the output of resultant fuel cells using such MEAs from the following viewpoint as well. The ratio thereof has an optimum value or optimum region for the maximization of the resultant output. According to the EXAMPLE, such ratio could be made substantially constant in the entire region or area of the catalyst layer.

[Assembling Fuel Cell and Measurement of Cell Performance]

The feature of the EXAMPLE or the present invention is in the structure of and method of making an MEA. A well-known method of making fuel cells was used for assembling fuel cells according to the EXAMPLE and COMPARATIVE EXAMPLE, using the MEAs according to the EXAMPLE and COMPARATIVE EXAMPLE as described in the following.

FIG. 4A is a schematic cross-sectional view, showing a main part of a resultant cell stack (and hence fuel cell) having MEAs 1 or MEAs 2 obtained in the EXAMPLE and COMPARATIVE EXAMPLE incorporated therein.

Referring to the cell stack (fuel cell) as shown in FIG. 4A, the method of making the fuel cell as employed here will be described as follows. First, an MEA 1 obtained in the EXAMPLE was used as MEA 40. FIG. 4B is a schematic enlarged cross-sectional view of a portion in FIG. 4A encircled by a dashed line circle B as shown therein. As shown in the partially enlarged view of FIG. 4B, MEA 40 comprised a proton conductive electrolyte membrane 41, catalyst layers 42 and gas diffusion layers 43. The MEA had a gasket 44 (having a thickness of 150 μm), made of silicone rubber, bonded at an outer periphery thereof.

Next, electrically conductive separator plates 45 were prepared, each of which had an outer dimension of 8 cm × 8 cm, a thickness of 13 mm and gas flow channels 45 (oxidant gas flow channel and fuel gas flow channel) having a depth of 5 mm and which was made of a resin-impregnated graphite plate. Using an MEA 40 and two of such electrically conductive separator plates 45, a unit cell 46 was formed in a manner that one major surface of MEA 40 contacted one surface of one separator plate, which surface had the oxidant gas (air) flow channel, and that the other major surface of MEA 40 contacted one surface of the other separator plate, which surface had the fuel gas flow channel. Then, a plurality of such unit cells 46 was prepared.

Meanwhile, a cooling water unit (48) made of an electrically conductive separator plate 48 having an outer dimension of 8 cm × 8 cm, a thickness of 13 mm and cooling water flow channels 49 having a depth of 5 mm was prepared. Then, a plurality of such cooling water units (48) was prepared.

By stacking the plurality of unit cells 46 and the cooling water units (48), a cell stack was made, wherein the unit cells and the cooling water units were electrically connected in series. Although FIG. 4A shows four unit cells, actually a cell stack having eight unit cells was made in the following manner. First, two unit cells were stacked to make a double cell. Then four of such double cells were prepared. On the other hand, five cooling water units were prepared. On a first cooling water unit, a first double cell was stacked, and a second cooling water unit was stacked on the first double cell. By repeating such alternate stacking, a cell stack having four double cells, each sandwiched by a pair of cooling water units, was made.

On both ends (cooling water units) of the thus made cell stack having eight unit cells, well-known fuel finishing elements (not shown) were provided, and the cell stack was tightened. More specifically, on each end of the cell stack, a current collecting plate having gold plate on the surface thereof, an electrically insulating plate and an end plate was stacked. The assembly of the cell stack and the pair of current collecting plates, insulating plates and end plates was tightened by tightening elements including tightening rods penetrating both end plates and nuts in a manner that a tightening pressure (compression force) of 15 kgf/cm$^2$ per unit area of electrically conductive separator plate was applied to the cell stack. Then, the assembly and the tightening elements were fixed, thereby producing a fuel cell.

To the fuel cell, a fuel gas, an oxidant gas (air) and cooling water were supplied in a well-known manner. More specifically, the fuel gas, oxidant gas and cooling water were respectively supplied to manifolds (not shown), which were provided in the cell stack to penetrate the cell stack in the stacking direction as through-holes, e.g. in the separator plates 45 and cooling water units (48), and which are respectively connected to the fuel gas and oxidant gas flow channels 47 of each unit cell 46 and to cooling water flow channel 49 of each cooling water unit (48). Thereby, each MEA was supplied with the fuel gas and the oxidant gas from the gas flow channel and the oxidant flow channel, respectively facing the fuel electrode and the oxidant electrode of the MEA, and was cooled by the cooling water.

The fuel cell thus made in the above-described manner used MEA 1 as also described above, and was referred to as Stack 1. In the same manner, a fuel cell using MEA 2 in place of MEA 1 was made. The thus made fuel cell using MEA 2 was referred to as Stack 2.

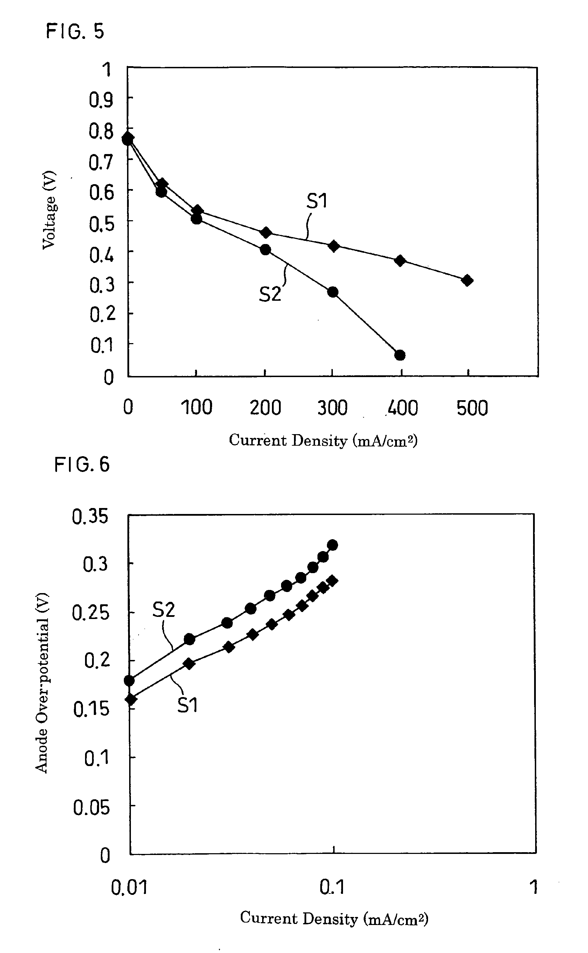

For both Stacks 1 and 2, a methanol aqueous solution of 2 mol/1 was supplied to each fuel electrode (anode) at a temperature of 60 °C, and air was supplied to each air electrode (cathode) through a bubbler of 60 °C (namely a humidifier having a saturated water vapor pressure at 60 °C) under the conditions of a cell temperature of 60 °C and air utilization rate (Uo) of 30%. Further, the air outlet was pressurized at 2 atm. Thereby, both Stacks 1 and 2 were subjected to discharging tests. FIG. 5 shows the results of the discharging tests.

FIG. 5 is a graph showing cell characteristics of Stacks 1 and 2, where the curve S1 shows the characteristics of Stack 1, and the curve S2 shows those of Stack 2. As described above, the catalyst layer of MEA 1 in Stack 1 was made by sequentially stacking catalyst thin film layers, using thermal transfer step for each stacking, whereas the catalyst layer of MEA 2 in Stack 2 was made in a conventional manner.

As shown in FIG. 5, the unit cell voltage (average output voltage obtained by dividing the total voltage of the cell stack by the number of unit cells) at a current density of 200 mA/cm$^2$ was 465 mV in the case of Stack 1, whereas that in the case of Stack 2 was 410 mV. In the case of Stack 1, furthermore, power generation was possible even at a current density of 500 mA/cm$^2$, which is in a higher current density region. In other words, in the case of Stack 1, power generation is possible even under such condition that the cell voltage is likely to decrease or drop due to so called diffusion control, namely even when the diffusion (diffusion velocity) of the fuel in the catalyst layer cannot catch up with the catalyst reaction.

It was confirmed from FIG. 5 that the fuel diffusion property was improved, thereby realizing a higher cell voltage, by varying the distribution of the catalyst in the catalyst layer, more specifically, decreasing the catalyst density at the gas diffusion layer side, and increasing the catalyst density at the proton conductive electrolyte membrane side.

[Measurement of Effective Reaction Area of Catalyst]

For comparing the effective reaction area of catalyst in the case of Stack 1 with that in the case of Stack 2, single electrode measurement was conducted. Specifically, single electrode measurements for anode (fuel electrode) were conducted here. FIG. 6 shows the results of such measurements.

FIG. 6 is a graph showing the anode over-potential characteristics of Stacks 1 and 2, where the curves S1 and S2 show those of Stacks 1 and 2, respectively.

More specifically, for both Stacks 1 and 2, a methanol aqueous solution of 2 mol/1 was supplied to each fuel electrode (anode) at a temperature of 60 °C, and nitrogen was supplied to each air electrode (cathode) through a bubbler of 60 °C, whereby each Stack was operated to generate power, and the overvoltages of each Stack at various current densities were measured.

By so plotting the results of the measurements that the over-potential is normally plotted on the vertical axis, whereas the current density is logarithmically plotted on the horizontal axis (Tafel plot), it becomes possible to discriminate factors of the cell voltage drop between the voltage drop attributed to reaction resistance and that attributed to diffusion control (namely, the diffusion of the fuel in the catalyst layer being unable to catch up with the catalyst reaction).

On the basis of the voltage drop attributed to the reaction resistance, exchange current density $i_0$ can be obtained from the gradient of Tafel plot. As expressed by the following equation (1), the exchange current density $i_0$ is given by the product of velocity constant k (representing catalytic function) and effective reaction area A at a constant temperature, and is an index of representing catalytic reactivity:

$$i_0 = nFAkC_R \cdot exp\left[-\frac{\alpha nF}{RT} \cdot E_0\right] \qquad (1)$$

where $i_0$ is exchange current density, n is number of reacted electrons, F is Faraday constant, A is effective reaction area, k is velocity constant, $C_R$ is concentration of reactants, $\alpha$ is symmetry constant, R is gas constant, T is absolute temperature, and $E_0$ is equilibrium potential.

Furthermore, if comparison is made at a constant effective reaction area A, the current exchange density $i_0$ can be used as an index for representing the catalytic function k itself. On the other hand, if comparison is made at a constant catalytic function k, the exchange current density $i_0$ can be used as an index for representing the effective reaction area.

On the basis of the results as obtained here, the catalytic reactivity (represented by the velocity constant k) and the effective reaction area A, as well as the current exchange density $i_0$, can be evaluated by comparing the current density at a certain over-potential. According to the present measurement, the current density at an over-potential of 0.3 V was calculated, and was converted to mass activity per unit catalyst mass for making comparison.

Consequently, from the values of over-potential as shown in FIG. 6, it can be understood that the mass activity and hence the effective reaction area of the catalyst in the case of Stack 1 are higher than those in the case of Stack 2.

Comparison as to mass activity was further made at an over-potential of 0.2 V, whereby it was found that the mass activity in the case of Stack 1 was 11.6 mA/mg, whereas that in the case of Stack 2 was 7.4 mA/mg. This indicates that a higher cell voltage can be obtained with a larger utilization area of catalyst in the case of Stack 1 than in the case of Stack 2.

In the above EXAMPLE, the catalyst layer was formed by sequentially stacking plural catalyst thin film layers on the proton conductive electrolyte membrane, using the transfer process, thereby producing an integral assembly of the membrane and the catalyst layer. However, it is also possible to first form, on a transfer sheet, a catalyst layer comprising plural catalyst thin film layers, and then to transfer the thus formed catalyst layer onto a proton conductive electrolyte membrane, using transfer process, thereby obtaining an integral assembly of the membrane and the catalyst layer, as can be more specifically described as follows.

First, a mixture of a polymer electrolyte and a catalyst carried by a catalyst carrier is prepared, and is used to form a first catalyst thin film layer on a transfer sheet. Separately, a second catalyst thin film layer is formed on a transfer sheet in the same manner as for forming the first catalyst thin film layer. By transferring and stacking the second catalyst thin film layer onto the first catalyst thin film layer, a catalyst layer comprising two catalyst thin film layers is made on the transfer sheet. By increasing such steps of forming and transferring catalyst thin film layers, a catalyst layer of three or more catalyst thin film layers can be formed on a transfer sheet. By transferring such catalyst layer composed of plural catalyst thin film layers onto a proton conductive electrolyte membrane, an integral assembly of the membrane and the catalyst layer can be formed. Providing a pair of catalyst layers on both major surfaces of the membrane and also a pair of gas diffusion layers thereon, an MEA for fuel cell can be made.

It is to be noted that in the EXAMPLE, methanol was used for the fuel, but similar results were obtained when methanol was replaced by hydrogen or any one of other hydrocarbon fuels such as ethanol, ethylene glycol, dimethyl ether and a mixture(s) of such fuels. It was also confirmed that a liquid fuel could preliminarily be vaporized, and could be supplied to the fuel cell in the form of vapor.

It was further confirmed that other materials such as electrically conductive carbon cloth and metal mesh could replace the material for the gas diffusion layer, which was electrically conductive carbon paper in the EXAMPLE.

Furthermore, although the catalyst layer in the EXAMPLE used a catalyst carried by a carrier, it was confirmed that other catalysts such as non-carried catalyst (namely, catalyst being not carried by a carrier) could be used for the present invention.

As described hereinabove, it is important to so design a catalyst layer in an MEA for a fuel cell that the catalyst layer has such a density as to decrease from side thereof at the proton conductive electrolyte membrane to side thereof at the gas diffusion layer, and has such a weight ratio of the polymer electrolyte to the catalyst as to be substantially constant from side thereof at the proton conductive electrolyte membrane to side thereof at the gas diffusion layer. Thereby, the utilization rate of the catalyst increases, and the fuel diffusion in the catalyst layer is improved, whereby the resultant cell voltage of the fuel cell increases. Further, the unique process of preparing plural thin film layers for catalyst layer, and of stacking the plural thin film layers on a proton conductive electrolyte membrane, is advantageous also in that it is not necessary to prepare plural different catalyst pastes for a catalyst layer, and that a desired density gradient or distribution in the catalyst layer can be realized by using a single catalyst paste.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. An electrolyte membrane-electrode assembly for a fuel cell, the assembly comprising: a proton conductive electrolyte membrane; a pair of catalyst layers for contact with both surfaces of said proton conductive electrolyte membrane, respectively; and a pair of gas diffusion layers for contact with said catalyst layers, respectively, each of said catalyst layers comprising a polymer electrolyte and a catalyst carried by an electrically conductive catalyst carrier, wherein said catalyst layer has such a density as to decrease from side thereof at said proton conductive electrolyte membrane to side thereof at said gas diffusion layer, and has such a weight ratio of said polymer electrolyte to said catalyst as to be substantially constant from side thereof at said proton conductive electrolyte membrane to side thereof at said gas diffusion layer.

2. A fuel cell using the electrolyte membrane-electrode assembly according to claim 1.

3. A method of making an electrolyte membrane-electrode assembly for a fuel cell, the method comprising the steps of: preparing a mixture comprising at least a polymer electrolyte and a catalyst carried by a catalyst carrier; forming, on a transfer sheet, a thin film of said mixture; transferring said thin film onto at least one major surface of a proton conductive electrolyte membrane, thereby forming a catalyst thin film layer on said major surface of said proton conductive electrolyte membrane; repeating said transferring step at least once for forming at least one further catalyst thin film layer on said catalyst thin film layer, thereby forming a catalyst layer comprising a plurality of catalyst thin film layers; and providing a gas diffusion layer on said catalyst layer, wherein said transferring step causes said plurality of catalyst thin film layers in said catalyst layer to have such densities as to sequentially decrease from the one thereof at side of said proton conductive electrolyte membrane to the one thereof at side of said gas diffusion layer.

4. The method of making an electrolyte membrane-electrode assembly according to claim 3, wherein said transferring step comprises a thermal transfer process.

5. The method of making an electrolyte membrane-electrode assembly according to claim 3, wherein said transferring step comprises a pressing process for pressing respective ones of said plurality of said catalyst thin film layers toward said proton conductive electrolyte membrane.

6. A method of making a fuel cell using the method of making an electrolyte membrane-electrode assembly according to claim 3.

FIG. 1

FIG. 3

FIG. 2

FIG. 4A

FIG. 4B

EP 1 381 102 A2

FIG. 5

FIG. 6